# EUROPÄISCHE PATENTSCHRIFT

(11) **EP 3 800 031 B1**
(45) Veröffentlichungstag und Bekanntmachung des Hinweises auf die Patenterteilung: **29.06.2022**
(21) Anmeldenummer: 20198205.5
(22) Anmeldetag: 24.09.2020
(51) Int. Cl.: B29C 45/77

(54) **VERFAHREN ZUM SPRITZGIESSEN EINES SPRITZGIESSFÄHIGEN THERMOPLASTISCHEN MATERIALS**
METHOD OF INJECTION MOULDING AN INJECTION-MOULDABLE THERMOPLASTIC MATERIAL
PROCÉDÉ DE MOULAGE PAR INJECTION D'UNE MATIÈRE THERMOPLASTIQUE POUVANT ÊTRE MOULÉE PAR INJECTION

(30) Priorität: 02.10.2019 DE 102019126727
(43) Veröffentlichungstag der Anmeldung: 07.04.2021
(73) Patentinhaber: Wittmann Battenfeld GmbH, 2542 Kottingbrunn (AT)
(72) Erfinder: Roth, Wolfgang, 2700 Wiener Neustadt (AT); Huber, Markus Josef, 00-195 Warszawa (PL); Huber, Andreas Adolf, 01-748 Warszawa (PL)
(74) Vertreter: Gosdin, Carstensen & Partner Patentanwälte Partnerschaftgesellschaft mbB

(56) Entgegenhaltungen:
- WO-A1-01/39751
- WO-A1-03/033751
- WO-A1-2016/087558
- WO-A1-2021/047908
- CN-A- 107 598 171
- US-A- 5 030 397

## Beschreibung

Die Erfindung betrifft ein Verfahren zum Spritzgießen eines spritzgießfähigen thermoplastischen Materials in einer Spritzgießmaschine, wobei das Material zunächst in einer Plastifiziereinheit plastifiziert wird, anschließend unter Aufgeben eines Einspritzdrucks in ein Spritzgießwerkzeug eingespritzt wird, das Material dann zumindest unter zeitweiser Aufrechterhaltung eines Nachdrucks im Spritzgießwerkzeug abkühlt und aushärtet und schließlich das aus dem Material spritzgegossene Werkstück aus dem Spritzgießwerkzeug entformt wird.

Das Spritzgießen von Kunststoffen ist ein hinlänglich bekanntes Verfahren, welches gattungsgemäß durchgeführt wird. Nach dem Plastifizieren des thermoplastischen Kunststoffmaterials wird dieses von der Spritzeinheit über eine Einspritzdüse in das Werkzeug eingespritzt, wobei die Schmelze bei einem Einspritzdruck gehalten wird, der typischerweise zwischen 500 bar und 2.000 bar liegt. Eine Rückstromsperre verhindert hierbei das Zurückströmen der Schmelze entgegen der Einspritzrichtung in Richtung des Einfülltrichters. Nach der Füllung der Werkzeugkavität mit der Schmelze wird von der Plastifiziereinheit ein Nachdruck aufrechterhalten, um den Volumenschwund des Kunststoffmaterials beim Aushärten auszugleichen. Der Nachdruck liegt dabei üblicherweise unter dem Einspritzdruck, allerdings immer noch in ähnlicher Größenordnung.

Im Zusammenhang mit der Herstellung umweltfreundlicher Artikel ist die Verwendung von (thermoplastischen) Kunststoffen mitunter problematisch. Daher sind Anstrengungen unternommen worden, um Materialien bereitzustellen, die sich zwar thermoplastisch verhalten und folglich ähnlich wie Kunststoffe verarbeiten lassen, die allerdings unter Umweltgesichtspunkten günstiger als Kunststoffe sind.

Ein solches Material ist beispielsweise in der AT 516 548 A1 beschrieben. Hier wird ein thermoplastisches Gussmaterial offenbart, welches sich durch besonders günstige Recyclingeigenschaften auszeichnet. Auf das genannte Dokument wird hiermit ausdrücklich Bezug genommen.

Aus der DE 199 58 007 A1 ist es bekannt, für das Spritzgießen dem Kunststoffmaterial ein Formtrennmittel zuzusetzen, welches das Entformen des spritzgegossenen Formteils erleichtert. Hierzu wird das Formtrennmittel allerdings nur in sehr geringem Umfang zugesetzt (zumeist zwischen 0,1 und 3,0 Gew.-%). Aus dieser Druckschrift ist es auch bekannt, zur Verbesserung der Rieselfähigkeit und zur Reduzierung der Klebemittel dem KunststoffGranulat in sehr geringem Umfang (0,05 %) Talkum zuzusetzen.

Ähnliche und weitere Lösungen offenbaren die WO 2016/087558 A1, die WO 01/39751 A1, die WO 03/033751 A1, die US 5 030 397 A, die WO 2021/047908 A1 und die CN 107 598 171 A.

Der Erfindung liegt daher die **Aufgabe** zugrunde, ein Verfahren zum Spritzgießen eines thermoplastischen Materials, welches kein Kunststoff ist und vorstehend erwähnt wurde, vorzuschlagen, welches die Herstellung qualitativ hochwertiger Produkte ermöglicht und dabei gleichzeitig einen stabilen Fertigungsprozess gewährleistet.

Die **Lösung** dieser Aufgabe durch die Erfindung ist dadurch gekennzeichnet, dass das spritzgießfähige thermoplastische Material mindestens ein bei gegenüber Raumtemperatur (20°C) erhöhter Temperatur fließfähiges Bindemittel aufweist, welches bei Raumtemperatur eine feste Konsistenz aufweist, sowie mindestens einen bei Schmelztemperatur des Bindemittels nicht schmelzenden Stoff aufweist, wobei der Anteil des Bindemittels am gesamten Material mindestens 10,0 Gew.-% beträgt und wobei das Einspritzen des plastifizierten Materials in das Spritzgießwerkzeug bei einem Einspritzdruck erfolgt, der höchstens 100 bar beträgt.

Bevorzugt beträgt der Anteil des Bindemittels am gesamten Material mindestens 15,0 Gew.-%, besonders bevorzugt mindestens 20,0 Gew.-%.

Ferner beträgt der Anteil des nicht schmelzenden Stoffs am gesamten Material bevorzugt mindestens 40,0 Gew.-%, besonders bevorzugt mindestens 50,0 Gew.-%, und insbesondere mindestens 65,0 Gew.-%.

Dabei ist bevorzugt vorgesehen, dass beim Plastifizieren in der Plastifiziereinheit das Material so homogenisiert wird, dass das Bindemittel sowie der nicht schmelzende Stoff gleichmäßig im Material verteilt sind.

Im Unterschied zu vorbekannten Lösungen wird also das Bindemittel nicht nur in geringem Maße als Formtrennmittel vorgesehen, welches bei der Verarbeitung zur Kavitäts-Oberfläche des Werkzeugs migriert, sondern als wesentlicher Bestandteil, der im Material eingemischt ist.

Bevorzugt beträgt der Einspritzdruck höchstens 60 bar. Bei dem spritzgießfähigen thermoplastischen Material handelt es sich insbesondere um ein Fasergussmaterial, besonders bevorzugt mit einem Anteil an Mineralstoffen (insbesondere in Form von Kalziumkarbonat oder Kaolin).

Der Nachdruck beträgt vorzugsweise höchstens 500 bar; besonders bevorzugt liegt er zwischen 200 bar und 300 bar.

Durch die für das Spritzgießen ungewöhnlichen (niedrigen) Werte der genannten Drücke, trotz beachtlichem Anteil an nicht schmelzenden Inhaltsstoffen im Gussmaterial, hat sich für das genannte Material überraschenderweise gezeigt, dass gute Prozessbedingungen gegeben sind, die die oben genannte Aufgabe lösen.

Das Material wird (je nach Mischung) bevorzugt bei der Plastifizierung auf eine Temperatur zwischen 60 °C und 130 °C erhitzt. Die Temperatur des Materials in der Plastifiziereinheit wird dabei bevorzugt im geschlossenen Regelkreis geregelt, wozu Heizelemente und Kühlelemente eingesetzt werden. Hiermit kann die Temperatur des Materials sehr genau auf einem Soll-Wert gehalten werden, was für eine optimale Verarbeitung von Bedeutung ist.

Das Einspritzen des plastifizierten Materials erfolgt bevorzugt durch die translatorische Bewegung einer Plastifizierschnecke, die in der Plastifiziereinheit angeordnet ist, wobei am einen axialen Ende der Plastifizierschnecke eine aktiv betätigte Rückstromsperre angeordnet ist, die beim Einspritzen geschlossen wird.

Zu dem zu verarbeitenden Material, welches im wesentlichen frei von Kunststoff ist, dennoch allerdings thermoplastische Eigenschaften hat, wird auf die oben genannte AT 516 548 A1 ausdrücklich Bezug genommen.

Demgemäß ist insbesondere vorgesehen, dass das Bindemittel Wachs ist, insbesondere Pflanzenwachs, Tierwachs, Paraffinwachs, Montanwachs und/oder Stearin.

Indes ist der nicht schmelzende Stoff insbesondere ein Fasermaterial, ein Füllstoff, ein Farbstoff, ein Dekorationsstoff und/oder ein Duftstoff. Das Fasermaterial besteht dabei bevorzugt aus Naturfasern, aus Pflanzenfasern, aus Wolle, aus Haar, aus Seide, aus Mineralfasern, aus chemischen Fasern aus natürlichen Polymeren, insbesondere Viskose, Modal, Lyocell, Cupro, Acetat, Triacetat, Gummi, Pflanzeneiweiß, Tiereiweiß, Stärke, Glukose, Alginat, Chitosan, aus chemischen Fasern aus synthetischen Polymeren, insbesondere Polyester, Polyamid, Aramid, aus chemischen Fasern aus industriell erzeugten anorganischen Fasern, insbesondere Glas, Kohlenstoff, Mineralstoffen (Kalziumkarbonat, Kaolin), Keramik, Metall, aus Textilfasern, aus Papierfasern und/oder aus Recyclatfasern.

Der nicht schmelzende Stoff hat vorzugsweise einen Flammpunkt von mindestens 400 °C, besonders bevorzugt von mindestens 500 °C.

Das erfindungsgemäß vorgesehene thermoplastische Material ist also ein solches, welches insbesondere Bestandteile in Form von Wachs, Fasern und Mineralstoffen (Kalziumkarbonat, Kaolin) aufweist, so dass es von der EFSA (European Food Safety Authority) als "Sonstige (Verpackungs)Materialien biologischer Herkunft" eingestuft wird. Es unterfällt somit nicht der Klasse der Kunststoffe und hat unter ökologischen Gesichtspunkten günstigere Eigenschaften.

Für die Durchführung des Verfahrens haben sich spezielle Prozessparameter als besonders vorteilhaft erwiesen:
Zunächst sind die wesentlich niedrigeren (Einspritz)Drücke zu erwähnen, die deutlich niedriger liegen als beim Spritzgießen von thermoplastischen Kunststoffen; der Einspritzdruck liegt bevorzugt bei lediglich ca. 50 bar.

Der Schmelzpunkt des verarbeiteten Materials liegt zumeist zwischen 70 und 130 °C, weshalb eine genaue Temperaturführung, speziell im Schmelzpunktbereich, vorteilhaft ist.

Das Verarbeitungsfenster der Temperatur liegt häufig im Bereich von nur 4 bis 6 °C (das Material besitzt keinen Glasüberganspunkt und keinen plastischen Bereich, der Übergang von fest auf flüssig liegt häufig im Bereich von max. 10 °C, abhängig von der Materialmischung). Daher ist eine Temperaturregelung bei der Plastifizierung und beim Einspritzen auf +/- 1°C besonders vorteilhaft.

Die Beheizung des Plastifizierzylinders erfolgt bevorzugt elektrisch, wobei eine Gebläsekühlung ähnlich wie bei der Verarbeitung von Hart-PVC zum Einsatz kommen kann. Es ist aber auch möglich, eine Kombination aus elektrischer und flüssigkeitstemperierter Beheizung vorzusehen oder aber auch eine komplett flüssigkeitstemperierte Beheizung wie im Falle der Verarbeitung von Duroplast.

Die zu verarbeitenden Materialien können einen Schmelzpunkt von unter 60 °C aufweisen. In diesem Falle ist eine Schneckenkonstruktion der Plastifiziereinheit mit innenliegender Flüssigkeitstemperierung vorteilhaft.

Die Temperatur des Werkzeugs liegt generell zunächst je nach Materialmischung in der Nähe des Schmelzpunktes des Materials. Dabei ist allerdings eine Temperatur maximal 25 °C unterhalb des Schmelzpunkts vorteilhaft. Durch das Fehlen der für Kunststoffe typischen großen Erweichungsbereiche samt Glasübergangstemperatur sind die Formlinge dieser Gussmassen bereits bei Temperaturen in der Nähe des Schmelzbereichs sehr formstabil und erlauben eine Entformung bei solchen hohen Temperaturen. Als Vorteil daraus ergeben sich eine geringere benötigte Kühlleistung sowie eine glattere und besser abgeformte Oberfläche des Formteiles; eine zu kalte Werkzeugtemperatur und ein dadurch zu kaltes Entformen kann Risse vor und während des Entformungsvorgangs erzeugen.

Während des Dosierens wird das plastifizierte Material im sehr kleinen Temperaturfenster des pastösen Zustands über die Rückstromsperre transportiert, damit ein Gegendruck zum Schließen der Rückstromsperre aufgebaut werden kann. Das plastifizierte Material kann durch die Stehzeit (d. h. durch die Zeit zwischen dem Ende des Dosierens und dem Einspritzen) im Plastifizier-Zylinder flüssig werden, was nachteilig ist. Wird flüssiges Material dosiert, schließt die Rückstromsperre nicht reproduzierbar.

Angestrebt wird, dass durch die Prozessführung und auch durch das Schneckendesign ein schneller Phasenübergang von fest auf flüssig stattfinden kann (bevorzugt innerhalb eine Temperaturspanne von 4 bis 5 °C); beeinflusst werden kann dies über die Scherenergie oder die zugeführte Energie durch die Zylinderheizung (elektrisch und/oder flüssig) sowie durch das Halten der flüssigen Phase bis zum Einspritzvorgang. Ein Absinken der Temperatur und ein dadurch herbeigeführter Phasenübergang von flüssig auf fest ist nachteilig, da hierdurch der Einspritzvorgang zum Stillstand kommen kann.

Bei dem vorgeschlagenen Material findet, ähnlich wie bei thermoplastischen Kunststoffen, keine Vernetzung statt. Dies bedeutet, dass das Material recycelt und dem Prozess wieder zugeführt werden kann.

Vorteilhaft ist ferner eine Beschichtung der Wandungen der Werkzeugkavität und gegebenenfalls auch der Plastifizier- und Einspritzschnecke, um einer Belagbildung vorzubeugen und eine verbesserte Entformung sowie eine bessere Oberflächenabformung sicherzustellen.

Sehr vorteilhaft ist im Zusammenhang mit der vorliegenden Erfindung, wenn eine effektiv wirksame Rückstromsperre vorgesehen wird, da das zu verarbeitende Material bei der Verarbeitung relativ flüssig wird. Bevorzugt wird eine aktiv schließende (z. B. federbetätigte) Rückstromsperre vorgesehen bzw. bei elektrischen Maschinen ein Rückdrehen der Schnecke.

Das zum Einsatz kommende spritzgießfähige Material wurde bereits oben näher erläutert.

Es kann Füllstoffe aufweisen, die aus pulverisierten Materialien bestehen, insbesondere aus Annaline, Basalt, Bims, Dolomit, Glas, Granat, Granit, Holzasche, Kaolinpulver, Knochenasche, Marmor, Meerschaum, Molkeprotein, Quarz, Schamotte, Schlämmkreide, Seidenprotein, Siliziumoxid, Talkum, Vulkanasche, Bentonit, Cristobalit, Glimmer, Kieselgur, Montmorillonit, Neuburger Kieselerde, Wollastonite und/oder Zeolith.

Bei einem Ausführungsbeispiel wurden in einer Spritzgießmaschine mit einem 4+4-fach-Werkzeug Kosmetiktiegel mit Deckel aus einem komplett auf Naturmaterialien basierenden Werkstoff, wie oben erläutert, hergestellt.

Der Werkstoff ist ohne Verlust der materialtechnischen Eigenschaften mehrmals recyclierbar. Der Tiegel wird mit dem Hauptaggregat der Maschine, der Deckel mit einem L-Aggregat gespritzt. Die Maschine ist mit einem Roboter ausgestattet, der ein rundes Papierlabel aus einem Magazin entnimmt und schließseitig für den Tiegelboden einlegt. In weiterer Folge entnimmt der Roboter die Teile von der Düsenseite der Spritzgießmaschine und übergibt die Tiegel an einen anderen Roboter, der sie in eine Schraubstation legt. Der Roboter bringt die Tiegeldeckel in die Schraubstation ein, wo sie mit den Tiegeln zusammengefügt und abgelegt werden.

Gemäß dem vorgeschlagenen Konzept werden insbesondere vollständig biologisch abbaubare Materialmischungen verarbeitet, die vorzugsweise nicht wasserlöslich sind und sich somit für die genannten Anwendungen besonders empfehlen. Durch die gute Homogenisierung der Materialmischung in der Plastifiziereinheit werden sämtliche Bestandteile der Mischung gleichmäßig verteilt. Damit erhöhen die Bestandteile des Materials und insbesondere die nicht schmelzenden Stoffe die mechanischen Eigenschaften des Produkts vorteilhaft.

Aufgrund der vorgeschlagenen Materialmischung besteht in besonders vor der Last der Weise die Möglichkeit eines effektiven Recyclings. Probleme, die sich bei der Verarbeitung mancher Kunststoffe und insbesondere mit Blick auf deren Recycling bis dato stellen, können eliminiert werden.

Dem Material können auch mineralische Pulver und Körner zugegeben werden, insbesondere aus den oben genannten Stoffen.

Bevorzugt besteht das Material ausschließlich aus dem genannten Bindemittel sowie aus dem nicht schmelzenden Stoff. Darunter ist insbesondere zu verstehen, dass sonstige Stoffe und insbesondere unvermeidbare Bestandteile in der Mischung nur in einem untergeordneten Maße auftreten, bevorzugt unterhalb von 10 Gew.-%, besonders bevorzugt unterhalb von 5 Gew.-%; die Summe aus Bindemittel und nicht schmelzendem Stoff beträgt demgemäß dann insbesondere mindestens 90 Gew.-% bzw. besonders bevorzugt mindestens 95 Gew.-%.

## Patentansprüche

1. Verfahren zum Spritzgießen eines spritzgießfähigen thermoplastischen Materials in einer Spritzgießmaschine, wobei das Material zunächst in einer Plastifiziereinheit plastifiziert wird, anschließend unter Aufgeben eines Einspritzdrucks in ein Spritzgießwerkzeug eingespritzt wird, das Material dann zumindest unter zeitweiser Aufrechterhaltung eines Nachdrucks im Spritzgießwerkzeug abkühlt und aushärtet und schließlich das aus dem Material spritzgegossene Werkstück aus dem Spritzgießwerkzeug entformt wird,
**dadurch gekennzeichnet,**
**dass** das spritzgießfähige thermoplastische Material mindestens ein bei gegenüber Raumtemperatur (20°C) erhöhter Temperatur fließfähiges Bindemittel aufweist, welches bei Raumtemperatur eine feste Konsistenz aufweist, sowie mindestens einen bei Schmelztemperatur des Bindemittels nicht schmelzenden Stoff aufweist,
wobei der Anteil des Bindemittels am gesamten Material mindestens 10,0 Gew.-% beträgt,
wobei das Einspritzen des plastifizierten Materials in das Spritzgießwerkzeug bei einem Einspritzdruck erfolgt, der höchstens 100 bar beträgt.

2. Verfahren nach Anspruch 1, **dadurch gekennzeichnet, dass** der Anteil des Bindemittels am gesamten Material mindestens 15,0 Gew.-%, vorzugsweise mindestens 20,0 Gew.-%, beträgt.

3. Verfahren nach Anspruch 1 oder 2, **dadurch gekennzeichnet, dass** der Anteil des nicht schmelzenden Stoffs am gesamten Material mindestens 50,0 Gew.-% beträgt.

4. Verfahren nach Anspruch 3, **dadurch gekennzeichnet, dass** der Anteil des nicht schmelzenden Stoffs am gesamten Material mindestens 65,0 Gew.-% beträgt.

5. Verfahren nach einem der Ansprüche 1 bis 4, **dadurch gekennzeichnet, dass** beim Plastifizieren in der Plastifiziereinheit das Material so homogenisiert wird, dass das Bindemittel sowie der nicht schmelzende Stoff gleichmäßig im Material verteilt sind.

6. Verfahren nach einem der Ansprüche 1 bis 5, **dadurch gekennzeichnet, dass** der Einspritzdruck höchstens 60 bar beträgt.

7. Verfahren nach einem der Ansprüche 1 bis 6, **dadurch gekennzeichnet, dass** der Nachdruck höchstens 500 bar beträgt.

8. Verfahren nach Anspruch 7, **dadurch gekennzeichnet, dass** der Nachdruck zwischen 200 bar und 300 bar beträgt.

9. Verfahren nach einem der Ansprüche 1 bis 8, **dadurch gekennzeichnet, dass** das Material bei der Plastifizierung auf eine Temperatur zwischen 60 °C und 130 °C erhitzt wird.

10. Verfahren nach einem der Ansprüche 1 bis 9, **dadurch gekennzeichnet, dass** die Temperatur des Materials in der Plastifiziereinheit im geschlossenen Regelkreis geregelt wird, wozu Heizelemente und Kühlelemente eingesetzt werden.

11. Verfahren nach einem der Ansprüche 1 bis 10, **dadurch gekennzeichnet, dass** das Einspritzen des plastifizierten Materials durch die translatorische Bewegung einer Plastifizierschnecke erfolgt, die in der Plastifiziereinheit angeordnet ist, wobei am einen axialen Ende der Plastifizierschnecke eine aktiv betätigte Rückstromsperre angeordnet ist, die beim Einspritzen geschlossen wird.

12. Verfahren nach einem der Ansprüche 1 bis 11, **dadurch gekennzeichnet, dass** das Bindemittel Wachs ist, insbesondere Pflanzenwachs, Tierwachs, Paraffinwachs, Montanwachs und/oder Stearin.

13. Verfahren nach einem der Ansprüche 1 bis 12, **dadurch gekennzeichnet, dass** der nicht schmelzende Stoff ein Fasermaterial, ein Füllstoff, ein Farbstoff, ein Dekorationsstoff und/oder ein Duftstoff ist.

14. Verfahren nach Anspruch 13, **dadurch gekennzeichnet, dass** das Fasermaterial aus Naturfasern, aus Pflanzenfasern, aus Wolle, aus Haar, aus Seide, aus Mineralfasern, aus chemischen Fasern aus natürlichen Polymeren, insbesondere Viskose, Modal, Lyocell, Cupro, Acetat, Triacetat, Gummi, Pflanzeneiweiß, Tiereiweiß, Stärke, Glukose, Alginat, Chitosan, aus chemischen Fasern aus synthetischen Polymeren, insbesondere Polyester, Polyamid, Aramid, aus chemischen Fasern aus industriell erzeugten anorganischen Fasern, insbesondere Glas, Kohlenstoff, Mineralstoffen (Kalziumkarbonat, Kaolin), Keramik, Metall, aus Textilfasern, aus Papierfasern und/oder aus Recyclatfasern besteht.

15. Verfahren nach einem der Ansprüche 1 bis 14, **dadurch gekennzeichnet, dass** der nicht schmelzende Stoff einen Flammpunkt von mindestens 400 °C aufweist, vorzugsweise von mindestens 500 °C.

## Claims

1. Method for injection molding an injection-moldable thermoplastic material in an injection molding machine, wherein the material is first plasticized in a plasticizing unit, is then injected into an injection mold while applying an injection pressure, the material then cools and hardens at least while a holding pressure is temporarily maintained in the injection mold, and finally the workpiece injection molded from the material is demolded from the injection mold,
**characterized in**
**that** the injection-moldable thermoplastic material comprises at least one binder which is flowable at elevated temperature compared with room temperature (20 °C) and has a solid consistency at room temperature, and at least one substance which does not melt at the melting temperature of the binder,
wherein the proportion of the binder to the total material is at least 10.0 % by weight,
wherein the injection of the plasticized material into the injection mold takes place at an injection pressure which is at most 100 bar.

2. Method according to claim 1, **characterized in that** the proportion of the binder to the total material is at least 15.0 % by weight, preferably at least 20.0 % by weight.

3. Method according to claim 1 or 2, **characterized in that** the proportion of the non-melting substance to the total material is at least 50.0 % by weight.

4. Method according to claim 3, **characterized in that** the proportion of the non-melting substance to the total material is at least 65.0 % by weight.

5. Method according to one of claims 1 to 4, **characterized in that**, during plasticizing in the plasticizing unit, the material is homogenized in such a way that the binder and the non-melting substance are uniformly distributed in the material.

6. Method according to one of claims 1 to 5, **characterized in that** the injection pressure is at most 60 bar.

7. Method according to one of claims 1 to 6, **characterized in that** the holding pressure is at most 500 bar.

8. Method according to claim 7, **characterized in that** the holding pressure is between 200 bar and 300 bar.

9. Method according to one of claims 1 to 8, **characterized in that** the material is heated to a temperature between 60 °C and 130 °C during plasticization.

10. Method according to one of claims 1 to 9, **characterized in that** the temperature of the material in the plasticizing unit is controlled in a closed loop control, for which purpose heating elements and cooling elements are used.

11. Method according to one of claims 1 to 10, **characterized in that** the injection of the plasticized material is effected by the translatory movement of a plasticizing screw arranged in the plasticizing unit, wherein an actively actuated non-return valve being arranged at one axial end of the plasticizing screw and being closed during injection.

12. Method according to one of claims 1 to 11, **characterized in that** the binder is wax, in particular vegetable wax, animal wax, paraffin wax, montan wax and/or stearin.

13. Method according to one of claims 1 to 12, **characterized in that** the non-melting substance is a fiber material, a filler, a dye, a decorative substance and/or a fragrance.

14. Method according to claim 13, **characterized in that** the fiber material consists of natural fibers, of plant fibers, of wool, of hair, of silk, of mineral fibers, of chemical fibers of natural polymers, in particular viscose, modal, lyocell, cupro, acetate, triacetate, gum, plant protein, animal protein, starch, glucose, alginate, chitosan, of chemical fibers of synthetic polymers, in particular polyester, polyamide, aramid, of chemical fibers of industrially produced inorganic fibers, in particular glass, carbon, minerals (calcium carbonate, kaolin), ceramics, metal, of textile fibers, of paper fibers and/or of recycled fibers.

15. Method according to one of claims 1 to 14, **characterized in that** the non-melting substance has a flash point of at least 400 °C, preferably of at least 500 °C.

## Revendications

1. Procédé de moulage par injection d'un matériau thermoplastique moulable par injection dans une machine à mouler par injection, le matériau étant d'abord plastifié dans une unité de plastification, puis, par application d'une pression d'injection, étant injecté dans un moule à injection, le matériau étant ensuite refroidi et durci dans le moule à injection, au moins avec maintien intermittent d'une post-pression, et finalement la pièce moulée par injection en le matériau étant démoulée du moule à injection,
**caractérisé en ce que,**
le matériau thermoplastique moulable par injection comprend au moins un liant fluide à une température plus élevée que la température ambiante (20°C), liant qui, à la température ambiante, présente une consistance solide, et comprend au moins une substance qui ne fond pas à la température de fusion du liant,
la proportion du liant par rapport à la totalité du matériau étant d'au moins 10,0 % en poids,
l'injection du matériau plastifié dans le moule à injection ayant lieu sous une pression d'injection qui est au maximum de 100 bar.

2. Procédé selon la revendication 1, **caractérisé en ce que** la proportion du liant par rapport à la totalité du matériau est d'au moins 15,0 % en poids, de préférence d'au moins 20,0 % en poids.

3. Procédé selon la revendication 1 ou 2, **caractérisé en ce que** la proportion de la substance qui ne fond pas, par rapport à la totalité du matériau, est d'au moins 50,0 % en poids.

4. Procédé selon la revendication 3, **caractérisé en ce que** la proportion de la substance qui ne fond pas, par rapport à la totalité du matériau, est d'au moins 65,0 % en poids.

5. Procédé selon l'une des revendications 1 à 4, **caractérisé en ce que**, lors de la plastification dans l'unité de plastification, le matériau est homogénéisé de façon que le liant, ainsi que la substance qui ne fond pas, soient uniformément répartis dans le matériau.

6. Procédé selon l'une des revendications 1 à 5, **caractérisé en ce que** la pression d'injection est d'au plus 60 bar.

7. Procédé selon l'une des revendications 1 à 6, **caractérisé en ce que** la post-pression est d'au plus 500 bar.

8. Procédé selon la revendication 7, **caractérisé en ce que** la post-pression est comprise entre 200 bar et 300 bar.

9. Procédé selon l'une des revendications 1 à 8, **caractérisé en ce que** le matériau, lors de la plastification, est chauffé à une température entre 60 °C et 130°C.

10. Procédé selon l'une des revendications 1 à 9, **caractérisé en ce que** la température du matériau dans l'unité de plastification est régulée dans un circuit de régulation fermé, dans lequel on utilise des éléments chauffants et des éléments refroidissants.

11. Procédé selon l'une des revendications 1 à 10, **caractérisé en ce que** l'injection du matériau plastifié a lieu par un mouvement de translation d'une vis de plastification, qui est disposée dans l'unité de plastification, un clapet de non-retour, à action active, qui est fermé lors de l'injection, étant disposé à une extrémité axiale de la vis de plastification.

12. Procédé selon l'une des revendications 1 à 11, **caractérisé en ce que** le liant est une cire, en particulier une cire végétale, une cire animale, une cire de paraffine, une cire de lignite et/ou de la stéarine.

13. Procédé selon l'une des revendications 1 à 12, **caractérisé en ce que** la substance qui ne fond pas est un matériau fibreux, une charge, un colorant, un tissu décoratif et/ou une substance aromatique.

14. Procédé selon la revendication 13, **caractérisé en ce que** le matériau fibreux est constitué de fibres naturelles, de fibres végétales, de laine, de poils, de soie, de fibres minérales, de fibres chimiques de polymères naturels, en particulier la viscose, le modal, le lyocell, le cupro, l'acétate, le triacétate, le caoutchouc, les protéines végétales, les protéines animales, l'amidon, le glucose, l'alginate, le chitosane, de fibres chimiques de polymères synthétiques, en particulier les polyesters, le polyamide, l'aramide, de fibres chimiques de fibres inorganiques produites à l'échelle industrielle, en particulier le verre, le carbone, les substances minérales (carbonate de calcium, kaolin), la céramique, le métal, de fibres textiles, de fibres de papier et/ou de fibres recyclées.

15. Procédé selon l'une des revendications 1 à 14, **caractérisé en ce que** la substance qui ne fond pas présente un point d'éclair d'au moins 400°C, de préférence d'au moins 500 °C.
